# EUROPEAN PATENT SPECIFICATION

(11) **EP 1 981 206 B1**
(45) Date of publication and mention of the grant of the patent: **15.08.2012**
(21) Application number: 07764119.9
(22) Date of filing: 25.06.2007
(51) Int. Cl.: H04L 12/02, H04L 12/56

(54) **AN EXCHANGE SYSTEM AND METHOD FOR INCREASING EXCHANGE BANDWIDTH**
EIN VERMITTLUNGSSYSTEM UND VERFAHREN ZUR STEIGERUNG DER VERMITTLUNGSBANDBREITE
SYSTÈME ET PROCÉDÉ D'ÉCHANGE PERMETTANT D'AUGMENTER LA BANDE PASSANTE D'ÉCHANGE

(30) Priority: 23.06.2006 CN 200610061326
(43) Date of publication of application: 15.10.2008
(73) Proprietor: Huawei Technologies Co., Ltd., Longgang District, Shenzhen Guangdong 518129 (CN)
(72) Inventor: HONG, Feng, Shenzhen, Guangdong 518129 (CN); CHEN, Cheng, Shenzhen, Guangdong 518129 (CN); FAN, Rong, Shenzhen, Guangdong 518129 (CN)
(74) Representative: Pfenning, Meinig & Partner GbR
(86) International application number: PCT/CN2007/070169
(87) International publication number: WO 2008/000193

(56) References cited:
- EP-A- 1 298 862
- EP-A- 1 416 671
- CN-A- 1 499 780
- CN-A- 1 503 522
- US-A- 6 032 194
- OLTEAN A D ET AL: "ATCA: its performance and application for real time systems" REAL TIME CONFERENCE, 2005. 14TH IEEE-NPSS STOCKHOLM, SWEDEN JUNE 4-10, 2005, PISCATAWAY, NJ, USA,IEEE, 4 June 2005 (2005-06-04), pages 1-5, XP010858948 ISBN: 978-0-7803-9183-3

## Description

The present application claims priority of Chinese Application No. 200610061326.0 filed on June 23, 2006, entitled "Switching Structure for Extending Switching Bandwidth in ATCA/ATCA 300", which is incorporated herein by reference in its entirety.

### Field of the Invention

The present invention relates to the field of communications, and in particular, to a switching system compatible with ATCA/ATCA 300 architecture and a method for improving the switching bandwidth.

### Background of the Invention

Advanced Telecommunications Computing Architecture (ATCA) is an open industry standard architecture established and developed by PCI Industrial Computer Manufacturers Group (PICMG), and targets at a hardware platform technology commonly used for communication devices and computer servers. The ATCA includes various specifications involving the frame structure, power supply, heat dispersion, single board structure, backplane interconnection topology, system administration and proposals for a switching network and so on. The ATCA is fit for the cabinet of 600mm depth. The PICMG has also established a platform architecture standard of ATCA300 to meet the requirements of the cabinet of 300mm depth, and the backplane of ATCA is compatible with that of ATCA300.

The ATCA is a structure including a mid backplane and front and rear boards. A hub board and a node board both are the front boards. Node boards are connected with each other in a full mesh mode or through the hub boards. The ATCA may support sixteen slots (in 21-inch cabinet) at most, and support fourteen slots in a 19-inch cabinet. Each slot in ATCA may be divided into three zones including zone 1, zone 2 and zone 3. The zone 1 is an interconnection area for power supply and management, the zone 3 is an interconnection area for a front board and a corresponding rear board, and zone 2 is an interconnection area between the node board and the hub board (dual fabric star topology) or between the node boards (full mesh topology). If the full mesh topology is adopted, the ATCA may support sixteen node boards at most. If the dual fabric star topology is adopted, the ATCA may support fourteen node boards and two hub boards at most, and each hub board needs to be interconnected with other fifteen single boards (fourteen node boards and one hub board). If a dual-dual fabric star topology is adopted, the ATCA may support twelve node boards and four hub boards at most, and each hub board needs to be interconnected with other fifteen single boards (twelve node boards and three hub boards).

PICMG 3.0 defines three kinds of switching interconnection topologies, including full mesh, dual fabric star and dual-dual fabric star. In terms of these switching interconnection topologies, the interconnection between two node boards provides eight pairs of difference signals (four pairs of difference signals are sent and four pairs of difference signals are received) under the condition that a system is configured with sixteen slots or fourteen slots. In the present switching interconnection technologies, the operating rate of the physical link is mainly 2.5Gb/s, 3.125Gb/s, 5Gb/s and 6.25Gb/s.

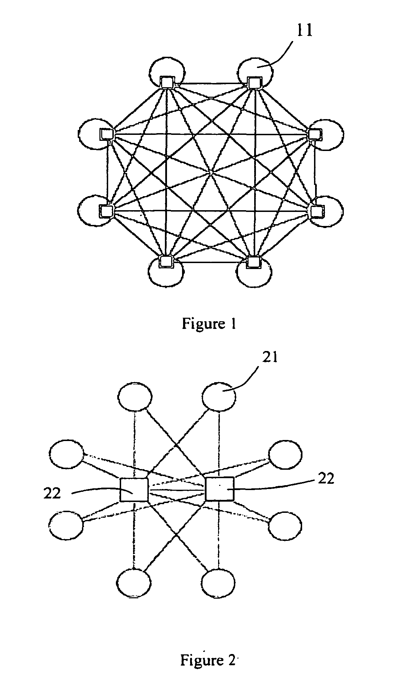

As shown in Figure 1, in the full mesh topology, all node boards 11 are directly connected with each other (Figure 1 illustrates a full mesh architecture configured with eight node boards). The PICMG 3.0 may support sixteen node boards at most to implement the full mesh topology. However, in the full mesh topology architecture, even the operating rate of the physical link is 6.25Gb/s, the communication bandwidth between two node boards is only 20Gb/s. In addition, in specific applications, the cost for implementing the full mesh topology for sixteen node boards is very high. Generally, the full mesh topology is only adopted for a system with less than eight nodes, which is not able to meet the requirements of a large capacity device.

As shown in Figure 2, the dual fabric star topology structure includes two hub board nodes 22 (logical slot number is 1 and 2 respectively) and may be configured with at most fourteen node boards (logical slot number is 3-16). The node boards 21 are all interconnected with the hub boards 22, and the communication between the node boards 21 is implemented through the hub boards. It is specified in the PICMG 3.0 that two switching networks operate in a redundancy mode (PICMG 3.0 Specification, Page 294, Para. 6.2.1.1). In the redundancy operating mode, only the main hub board can implement the switching function, while the backup hub board does not implement the switching function; or both hub boards can implement the switching function, while the node board only receives the data from the main hub board and does not receive the data from the backup hub board. Hence, in the dual fabric star topology, even if the operating rate of the physical link is 6.25Gb/s, the node board may only provide a bandwidth of 20Gb/s and one user interface with line rate of 10Gb/s.

The dual-dual fabric star topology structure is similar to the dual fabric star topology. The number of the hub boards is increased from two to four (the logical slot number is 1, 2, 3 and 4 respectively) and twelve node boards (the logical slot number is 5-16) may be configured at most. The node boards are all interconnected with the hub boards. The communication between the node boards is implemented through the hub boards. It is specified in the PICMG 3.0 that four hub boards are divided into two groups and each group operates in a dual fabric star mode independently (PICMG 3.0 Specification, Page 294, Para. 6.2.1.2). The two hub boards with the logical slot number of 1 and 2 belong to a group and are in a dual star switching fabric interconnection structure, and the two hub boards with the logical slot number of 3 and 4 belong to another group and are also in a dual fabric star switching network interconnection structure. In the dual-dual fabric star topology, a switching structure with two dual fabric star topologies is adopted and the communication bandwidth between the node boards is doubled. However, because the two switching structure are independent from each other, the data stream bandwidth for the communication between node boards is still the bandwidth of a dual fabric star topology, and the only difference is that two data streams may be supported.

Currently, in an application of the telecom platform, it is a basic requirement to provide a user interface of 10 Gb/s in the aggregation layer of a Metropolitan-Area Network (MAN). With the rapid development of Internet, telecom equipment may be required to provide a higher bandwidth in recent years. The equipment in the aggregation layer may even be required to provide a user interface of 40 Gb/s. Considering the speedup ratio and the processing overhead of the switching network and service processing, the user interface of 40 Gb/s generally requires the backplane of the node board to provide a bandwidth of 60 Gb/s or more. Therefore, under the current definition of PICMG 3.0 standard, none of the full mesh topology, dual fabric star topology and the dual-dual fabric star topology can provide enough bandwidth for the communication between node boards.

D1 (EP-A-1 416 671) discloses a backplane architecture includes redundant node boards operatively communicating with redundant switch fabric boards.

D2 (EP-A-1 298 862) discloses a system and method for selecting a routing datapath between an active datapath and a redundant dataptath for a communication device.

D3 ("ATCA: its performance and application for real time system" by Oltean et al.) presents the ATCA standard and its possible application in real time systems.

### Summary of the Invention

The present invention provides a switching system and method for improving a switching bandwidth, according to the claims so as to expand a switching bandwidth between node boards and meet the requirement for bandwidth of a user interface.

### Brief Description of the Drawings

Figure 1 is a schematic diagram illustrating the structure of a full mesh topology in ATCA in the prior art;

Figure 2 is a schematic diagram illustrating the structure of a dual fabric star topology in ATCA in the prior art;

Figure 3 is a block diagram illustrating the principle of a system according to an embodiment of the present invention (dual plane switching);

Figure 4 is a diagram illustrating the backplane connection topology configured with two hub boards (dual plane switching) according to an embodiment of the present invention;

Figure 5 is a block diagram illustrating the principle of an embodiment of the present invention (triple plane switching);

Figure 6 is a diagram illustrating the backplane connection topology configured with three hub boards according to an embodiment of the present invention;

Figure 7 is a diagram illustrating the backplane connection topology configured Figure 8 is a diagram illustrating the backplane connection topology configured with five hub boards according to the second embodiment of the present invention.

### Detailed Description of the Embodiments

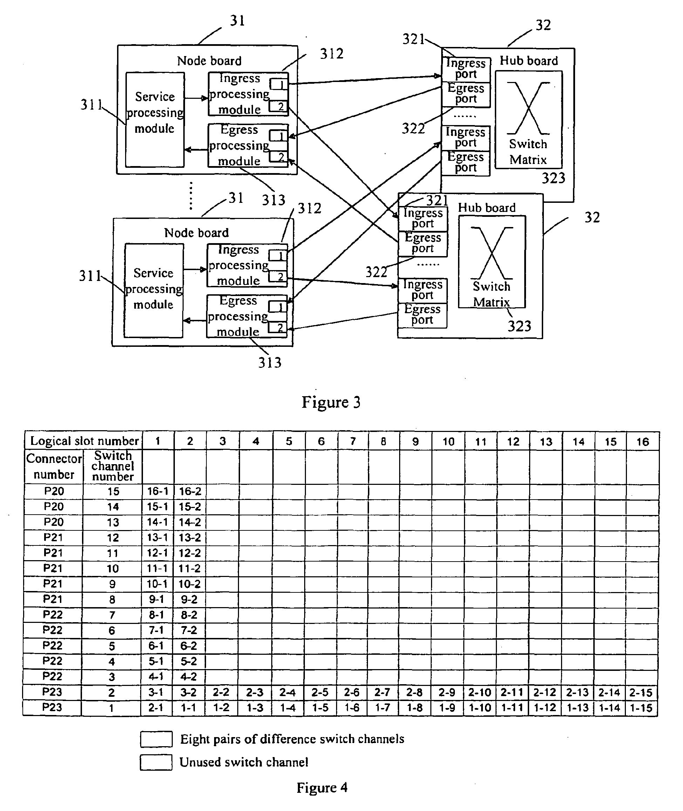

As shown in Figure 3, in a first embodiment of the present invention, the system is configured with fourteen node boards 31 and two hub boards 32. Each node board is connected with the two hub boards through a backplane (not shown). The fabric interface in zone 2 of the backplane includes four connectors P20, P21, P22 and P23, and fifteen switching channels may be provided at most for interconnection with other single boards.

In this embodiment, the node board 31 includes a service processing module 311, an ingress processing module 312 and an egress processing module 313, wherein the ingress processing module 312 and the egress processing module 313 are connected with the service processing module 311 respectively. The ingress processing module and egress processing module form a transmission module, and each node board includes at least one transmission module. The ingress processing module 312 is adapted to schedule data and dispatch data to each hub board 32 in proportion. The egress processing module 313 receives data from each hub board 32 and performs a data convergence and sequence ordering. The service processing module 311 mainly performs the service processing or provides an interface for network interconnection.

The hub board 32 includes a switching matrix 323, a plurality of ingress ports 321 and a plurality of egress ports 322. The hub board 32 switches data input from the ingress port 321 to the egress port 322 through the switching matrix 323 for outputting according to the routing information of the data packet.

In this embodiment, the ingress processing module 312 of each node board 31 is connected to the ingress ports 321 of the hub boards 32 respectively, and the egress processing module 313 is connected to the egress port 322 of the hub boards 32 respectively. Hence, the node board 32 serves as an input stage and an output stage during data communication, and the hub board 32 serves as a switching plane for implementing the switching function. The ingress processing module 312 of the node board 31 dispatches data to the ingress port 321 of each hub board 32 in proportion through data scheduling. The hub board 32 switches the data input from the ingress port 321 to the egress port 322 with the switching matrix 323 according to the routing information for the data packet, outputs the data to the egress processing module 313, and performs the data convergence and sequence ordering, thus accomplishes the data communication between node boards 31. In this embodiment, the node board provides eight pairs of difference signals, wherein the ingress processing module 312 provides four pairs for sending data and the egress processing module 313 provides four pairs for receiving data. A serial data interconnection is adopted for the difference signal.

When a first hub board fails, the transmission module dispatches data to the data links formed by the connection between the transmission module and the hub boards except for the first hub board, and receives the data on the data links formed by the connection between the transmission module and the hub boards except for the first hub board, so as to accomplish the data aggregating and reassembling. The data switching between the node boards is accomplished by cooperation of the hub boards, except for the first hub board.

Figure 4 is a diagram illustrating the backplane connection topology in the system shown in Figure 3 according to the first embodiment of the present invention. The backplane is connected with two hub board slots (each table item represents eight pairs of difference signals, including four pairs of signals received and four pairs of signals to be sent). At this point, the system operates in a dual plane switching mode, the logical slot number of hub boards 32 is 1 and 2, and the logical number of node boards 31 is 3-16. Data in the table of Figure 4 represents Slot-Channel. For example, data for "Slot: 1; Channel: 1" is "2-1", which indicates that the channel 1 of slot 1 is connected with channel 1 of slot 2.

Because two hub boards are used, the node board 31 merely uses the switching channel 1 and switching channel 2, so that the communication bandwidth between the node boards is eight times higher than the operating rate of the physical link (Link Speedx8). If the "Link Speed" is 2.5Gb/s, the interconnection bandwidth between the nodes is 20Gb/s (including the 8B/10B overhead). Hence, the node board may provide a user interface of 10Gb/s line rate. If one hub board fails, the communication between the node boards may continue through the other hub board, and the communication bandwidth is 8Gb/s.

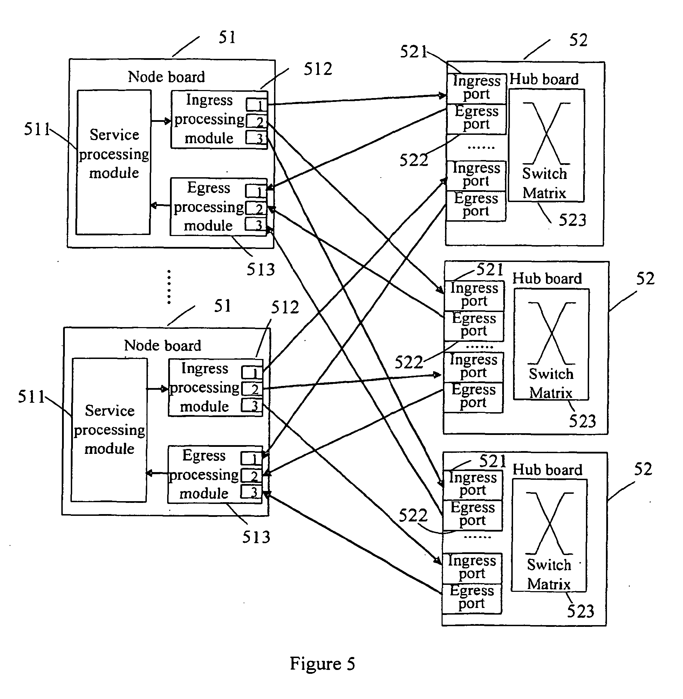

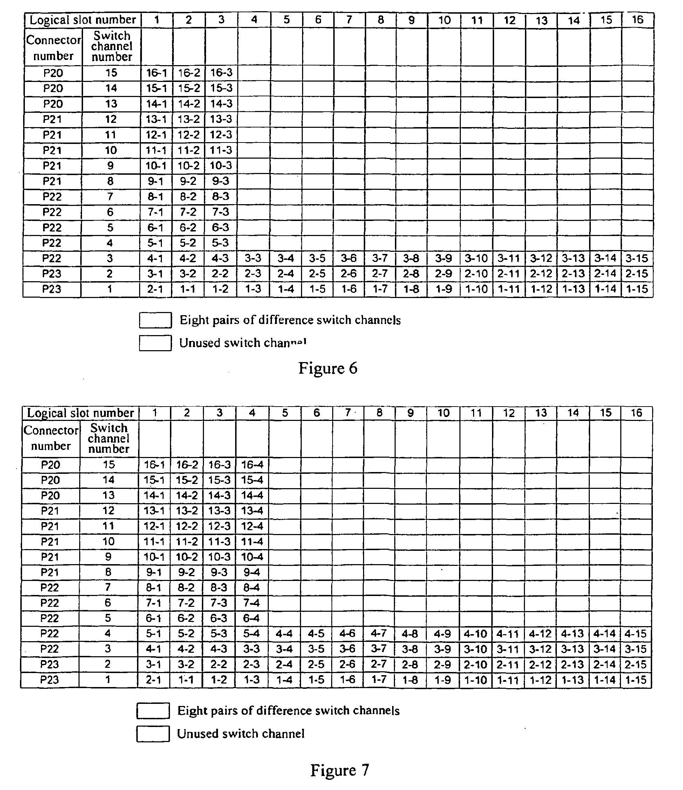

In the second embodiment of the present invention, three hub boards may be configured in the system. At this point, the system operates in a triple plane switching mode (also referred to as "2+1"), as shown in Figure 5. Logical slots 1, 2 and 3 are the hub boards 52, and logical slots 4-16 are the node boards 51. The structure of the node boards 51 is same as that of the embodiment shown in Figure 3, and includes a service processing module 511, an ingress processing module 512 and an egress processing module 513. The structure of the hub boards 52 is same as that of the embodiment shown in Figure 3, and includes a switching matrix 523, an ingress port 521 and an egress port 522. The node board slots use channels 1, 2 and 3, and the backplane connection topology is as shown in Figure 6. The communication bandwidth between the node boards is "Link Speed×12". If the "Link Speed" is 2.5Gb/s, the interconnection bandwidth between the nodes is 30Gb/s (including the 8B/10B overhead). The hub board slot also provides interconnection resources of switching interfaces for node boards. If a large switching bandwidth is not required, the node board may also be inserted into the hub board slot. For example, the node board may be inserted into logical slot 3, and at this point, the interconnection topology is same as the structure when the system is configured with two hub boards, and the node board of the first embodiment may be compatible with the logical slot.

In the third embodiment of the present invention, four hub boards may be configured in the backplane switching interface. At this point, the system operates in a four plane switching mode (also referred to as "3+1"). Logical slots 1, 2, 3 and 4 are the hub boards and logical slots 5-16 are the node boards. The node board slots use channels 1, 2, 3 and 4. The backplane connection topology is as shown in Figure 7. The communication bandwidth between node boards is "Link Speed×16". If the "Link Speed" is 2.5Gb/s, the interconnection bandwidth between nodes is 40Gb/s (including the 8B/10B overhead). If the node board is inserted into the logical slot 4, the interconnection topology is same as the structure when it is configured with three hub boards, and the node board of the second embodiment may be compatible with the logical slot. If the node boards are inserted into slots 3 and 4, the interconnection topology is same as the structure when it is configured with two hub boards, and the node board of the first embodiment may be compatible with the logical slot.

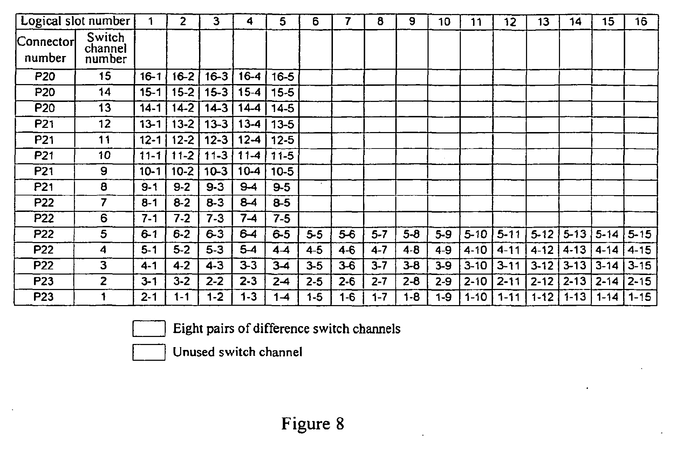

In the fourth embodiment of the present invention, five hub boards may be configured in the backplane switching interface. At this point, the system operates in a five plane switching mode (also referred to as "4+1"). Logical slots 1-5 are the hub boards and logical slots 6-16 are the node boards. The node board slots use channels 1, 2, 3, 4 and 5. The backplane connection topology is as shown in Figure 8. The communication bandwidth between the node boards is "Link Speed×20". If the "Link Speed" is 2.5Gb/s, the interconnection bandwidth between the nodes is 50Gb/s (including the 8B/10B overhead). If a node board is inserted into the logical slot 5, the interconnection topology is same as the structure when it is configured with four hub boards, and the node board of the third embodiment may be compatible with the logical slot. If node boards are inserted into slots 5 and 4, the interconnection topology is same as the structure when it is configured with three hub boards, and the node board of the second embodiment may be compatible with the logical slot. If the node boards are inserted into slots 5, 4 and 3, the interconnection topology is same as the structure when it is configured with two hub boards, and the node board of the first embodiment may be compatible with the logical slot.

By analogy, more hub board slots (more than five) may be configured to obtain larger switching interconnection bandwidth.

Table 1 shows the communication bandwidths (excluding the 8B/10B overhead) between node boards obtained by different operating rates of the physical link in various configurations.

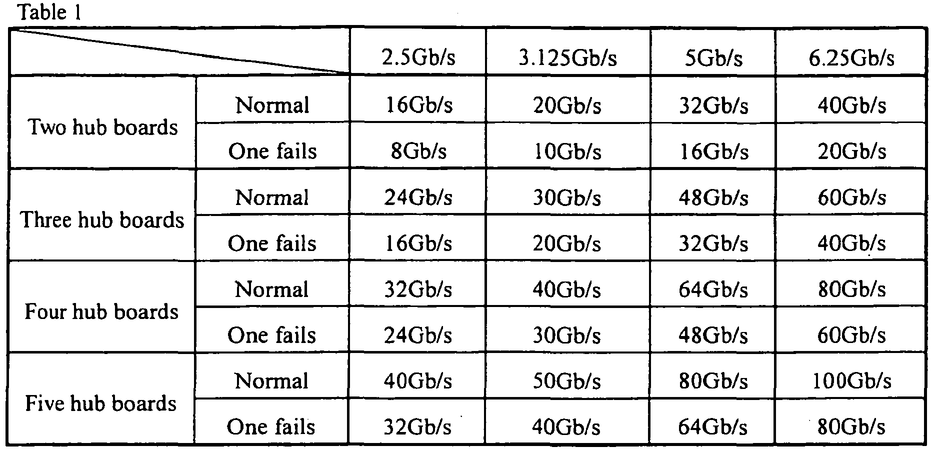

In above embodiments, each hub board is not limited to implement the function of one switching plane, but may perform the switching of a plurality of switching planes (e.g. one hub board may implement the switching function of two switching planes). The operating rate of the physical link for system interconnection is not limited to 2.5Gb/s, 3.125Gb/s, 5Gb/s and 6.25Gb/s, and the physical link may operate at other speed. The higher the operating rate is, the larger the switching bandwidth of the node board is.

In addition, in above embodiments, it is not limited to use eight pairs of difference signals (four pairs of signals received and four pairs of signals to be sent) for the node board to interconnect with the hub board, other number of difference signals may also be adopted for implementing the interconnection between the node board and the hub board, and different pin map may also be adopted in the signal definition.

In addition, in above embodiments, the number of slots (the node board slots and the hub board slots) in the system is not limited to sixteen and may be other value (for example, fourteen slots in a 19-inch cabinet).

Though the present invention is described above with preferred embodiments, it is not limited to those embodiments. It is noted that all modifications, equivalent replacements and improvements made within the scope of the present invention shall fall into the protect scope of the present invention.

## Claims

1. A switching system compatible with ATCA/ATCA300 architecture for improving switching bandwidth, comprising:
a backplane, a plurality of node boards (31) inserted into the backplane and at least two hub boards (32) inserted into the backplane, wherein the node boards (31) are connected with the hub boards (32) through the backplane, so as to dispatchs data to each hubboard for switching in a plurality of switchling planes,
each node board (31) is connected with the at least two hub boards (32);
at least two data links are formed between the node boards (31) and the at least two hub boards (32) to transmit different data, and the at least two hub boards (32) cooperate with each other to implement data switching between the node boards (31); and
the backplane comprises at least two hub board slots and a plurality of node board slots, the hub board slots are interconnected with each other, the hub board slots are connected with the node board slots, the hub board slots are adapted to have the hub boards (32) inserted, and the node board slots are adapted to have the node boards (31) inserted, wherein the hub board slots are further adapted to have the node boards (31) inserted.

2. The switching system for improving switching bandwidth according to claim 1, wherein each of the node boards (31) comprises at least one transmission module.

3. The switching system for improving switching bandwidth according to claim 2, wherein each of the hub boards (32) comprises a plurality of ports, the plurality of ports are connected with the transmission module to form a plurality of data links.

4. The switching system for improving switching bandwidth according to claim 3, wherein each of the ports comprises an ingress port (321) and an egress port (322).

5. The switching system for improving switching bandwidth according to claim 4, wherein the transmission module comprises:
an ingress processing module (312), adapted to dispatch data to the plurality of data links; and
an egress processing module (313), adapted to receive different data transmitted on the plurality of data links, and implement a data convergence and reassembling.

6. The switching system for improving switching bandwidth according to claim 5, wherein the ingress processing module (312) is connected with the ingress ports (321) on the at least two hub boards (32) respectively to form at least two ingress data links; and
the egress processing module (313) is connected with the egress ports (322) on the at least two hub boards (32) respectively to form at least two egress data links.

7. The switching system for improving switching bandwidth according to claim 2, wherein,
the transmission module is adapted to distribute data to be transmitted to other data links connected with a hub board (32) without failure and receive data on other data links connected with the hub board (32) without failure when a hub board (32) connected with the transmission module fails, so as to implement data convergence and reassembling.

8. A switching method for improving switching bandwidth, comprising:
providing interconnections between hub board slots of a backplane;
inserting at least two hub boards (32) into the hub board slots, and inserting node boards (31) into node board slots of the backplane, wherein the hub board slots are further adapted to have the node boards (31) inserted;
demultiplexing, by a node board (31), data to ingress ports (321) of the at least two hub boards (32) so as to dispatch data to each hubboard; and
switching, by the at least two hub boards (32), the data input from the ingress ports (321) to respective egress ports (322), and outputting the data to another node board (31), so as to implement a data switching between the node boards for switching in a plurality of switching planes.

9. The method for improving switching bandwidth according to claim 8, wherein,
the node board (31) demultiplexes the data to the ingress ports (321) of the at least two hub boards (32) in proportion.

10. The method for improving switching bandwidth according to claim 8 or 9, wherein,
when a hub board (32) fails, the node board (31) switches data through a hub board (32) without failure.

11. The method for improving switching bandwidth according to claim 10, wherein, when the hub board (32) fails, other hub boards (32) except for the failed hub board (32) cooperate with each other to implement a data switching function between the node boards (31).

## Patentansprüche

1. Vermittlungssystem, das mit einer ATCA/ATCA300-Architektur kompatibel ist, um eine Vermittlungsbandbreite zu verbessern, das Folgendes umfasst:
eine Rückwandplatine, mehrere Knotenplatten (31), die in die Rückwandplatine eingesteckt sind, und wenigstens zwei Hub-Platten (32), die in die Rückwandplatine eingesteckt sind, wobei die Knotenplatten (31) mit den Hub-Platten (32) durch die Rückwandplatine verbunden sind, um Daten zu jeder Hub-Platte abzuschicken, um in mehreren Vermittlungsebenen zu vermitteln,
wobei jede Knotenplatte (31) mit wenigstens zwei Hub-Platten (32) verbunden ist;
wobei wenigstens zwei Datenstrecken zwischen den Knotenplatten (31) und den wenigstens zwei Hub-Platten (32) ausgebildet sind, um verschiedene Daten zu senden, und die wenigstens zwei Hub-Platten (32) zusammenarbeiten, um eine Datenvermittlung zwischen den Knotenplatten (31) zu implementieren; und
die Rückwandplatine wenigstens zwei Hub-Platten-Steckplätze und mehrere Knotenplatten-Steckplätze umfasst, wobei die Hub-Platten-Steckplätze miteinander verbunden sind, wobei die Hub-Platten-Steckplätze mit den Knotenplatten-Steckplätzen verbunden sind, wobei die Hub-Platten-Steckplätze dazu ausgelegt sind, dass in sie die Hub-Platten (32) eingesteckt werden, und die Knotenplatten-Steckplätze dazu ausgelegt sind, dass in sie die Knotenplatten (31) eingesteckt werden, wobei die Hub-Platten-Steckplätze ferner dazu ausgelegt sind, dass in sie die Knotenplatten (31) eingesteckt werden.

2. Vermittlungssystem zum Verbessern einer Vermittlungsbandbreite nach Anspruch 1, wobei jede der Knotenplatten (31) wenigstens ein Sendemodul umfasst.

3. Vermittlungssystem zum Verbessern einer Vermittlungsbandbreite nach Anspruch 2, wobei jede der Hub-Platten (32) mehrere Ports umfasst, wobei die mehreren Ports mit dem Sendemodul verbunden sind, um mehrere Datenstrecken zu bilden.

4. Vermittlungssystem zum Verbessern einer Vermittlungsbandbreite nach Anspruch 3, wobei jeder der Ports einen Eintritts-Port (321) und einen Austritts-Port (322) umfasst.

5. Vermittlungssystem zum Verbessern einer Vermittlungsbandbreite nach Anspruch 4, wobei das Sendemodul Folgendes umfasst:
ein Eintrittsverarbeitungsmodul (312), das dazu ausgelegt ist, Daten an die mehreren Datenstrecken abzuschicken; und
ein Austrittsverarbeitungsmodul (313), das dazu ausgelegt ist, verschiedene Daten, die auf den mehreren Datenstrecken gesendet werden, zu empfangen und eine Datenkonvergenz und -neuzusammensetzung zu implementieren.

6. Vermittlungssystem zum Verbessern einer Vermittlungsbandbreite nach Anspruch 5, wobei das Eintrittsverarbeitungsmodul (312) mit den Eintritts-Ports (321) auf den wenigstens zwei jeweiligen Hub-Platten (32) verbunden ist, um wenigstens zwei Eintrittsdatenstrecken zu bilden; und
das Austrittsverarbeitungsmodul (313) mit den Austritts-Ports (322) auf den wenigstens zwei jeweiligen Hub-Platten (32) verbunden ist, um wenigstens zwei Austrittsdatenstrecken zu bilden.

7. Vermittlungssystem zum Verbessern einer Vermittlungsbandbreite nach Anspruch 2, wobei
das Sendemodul dazu ausgelegt ist, zu sendende Daten zu anderen Datenstrecken, die mit einer Hub-Platte (32) verbunden sind, fehlerfrei zu verteilen und Daten auf anderen Datenstrecken, die mit der Hub-Platte (32) verbunden sind, fehlerfrei zu empfangen, wenn eine Hub-Platte (32), die mit dem Sendemodul verbunden ist, ausfällt, um so eine Datenkonvergenz und -neuzusammensetzung zu implementieren.

8. Vermittlungsverfahren zum Verbessern einer Vermittlungsbandbreite, das Folgendes umfasst:
Vorsehen von Verbindungen zwischen Hub-Platten-Steckplätzen einer Rückwandplatine;
Einstecken von wenigstens zwei Hub-Platten (32) in die Hub-Platten-Steckplätze und Einstecken von Knotenplatten (31) in Knotenplatten-Steckplätze der Rückwandplatine, wobei die Hub-Platten-Steckplätze ferner dazu ausgelegt sind, dass in sie die Knotenplatten (31) eingesteckt werden;
Demultiplexieren durch eine Knotenplatte (31) von Daten auf Eintritts-Ports (321) der wenigstens zwei Hub-Platten (32), um so Daten zu jeder Hub-Platte abzuschicken; und
Vermitteln durch die wenigstens zwei Hub-Platten (32) der von den Eintritts-Ports (321) eingegebenen Daten zu entsprechenden Austritts-Ports (322) und Ausgeben der Daten zu einer weiteren Knotenplatte (31), um so eine Datenvermittlung zwischen den Knotenplatten für die Vermittlung in mehreren Vermittlungsebenen zu implementieren.

9. Verfahren zum Verbessern einer Vermittlungsbandbreite nach Anspruch 8, wobei die Knotenplatte (31) die Daten auf die Eintritts-Ports (321) der wenigstens zwei Hub-Platten (32) anteilig demultiplexiert.

10. Verfahren zum Verbessern einer Vermittlungsbandbreite nach Anspruch 8 oder 9, wobei
dann, wenn eine Hub-Platte (32) ausfällt, die Knotenplatte (31) Daten durch eine Hub-Platte (32) fehlerfrei vermittelt.

11. Verfahren zum Verbessern einer Vermittlungsbandbreite nach Anspruch 10, wobei dann, wenn die Hub-Platte (32) ausfällt, andere Hub-Platten (32) mit Ausnahme der ausgefallenen Hub-Platte (32) zusammenwirken, um eine Datenvermittlungsfunktion zwischen den Knotenplatten (31) zu implementieren.

## Revendications

1. Système de commutation compatible avec l'architecture ATCA/ATCA300 pour améliorer une largeur de bande de commutation, comprenant :
un fond de panier, une pluralité de cartes nodales (31) insérées dans le fond de panier et au moins deux cartes de concentrateur (32) insérées dans le fond de panier, les cartes nodales (31) étant connectées aux cartes de concentrateur (32) par le biais du fond de panier, de façon à expédier des données à chaque carte de concentrateur en vue de leur commutation dans une pluralité de plans de commutation,
chaque carte nodale (31) étant connectée aux au moins deux cartes de concentrateur (32);
au moins deux liaisons de données étant formées entre les cartes nodales (31) et les au moins deux cartes de concentrateur (32) afin de transmettre des données différentes, et les au moins deux cartes de concentrateur (32) coopérant l'une avec l'autre pour mettre en oeuvre une commutation des données entre les cartes nodales (31); et
le fond de panier comprenant au moins deux emplacements de cartes de concentrateur et une pluralité d'emplacements de cartes nodales, les emplacements de cartes de concentrateur étant interconnectés l'un avec l'autre, les emplacements de cartes de concentrateur étant connectés aux emplacement de cartes nodales, les emplacements de cartes de concentrateur étant adaptés pour l'insertion des cartes de concentrateur (32), et les emplacements de cartes nodales étant adaptés pour l'insertion des cartes nodales (31), les emplacements de cartes de concentrateur étant adaptés en outre pour l'insertion des cartes nodales (31).

2. Système de commutation pour améliorer une largeur de bande de commutation selon la revendication 1, dans lequel chacune des cartes nodales (31) comprend au moins un module de transmission.

3. Système de commutation pour améliorer une largeur de bande de commutation selon la revendication 2, dans lequel chacune des cartes de concentrateur (32) comprend une pluralité de ports, la pluralité de ports étant connectée au module de transmission afin de former une pluralité de liaisons de données.

4. Système de commutation pour améliorer une largeur de bande de commutation selon la revendication 3, dans lequel chacun des ports comprend un port d'entrée (321) et un port de sortie (322).

5. Système de commutation pour améliorer une largeur de bande de commutation selon la revendication 4, dans lequel le module de transmission comprend :
un module de traitement d'entrée (312), adapté pour expédier des données à la pluralité de liaisons de données ; et
un module de traitement de sortie (313), adapté pour recevoir des données différentes transmises sur la pluralité de liaisons de données, et mettre en oeuvre une convergence et un réassemblage des données.

6. Système de commutation pour améliorer une largeur de bande de commutation selon la revendication 5, dans lequel le module de traitement d'entrée (312) est connecté aux ports d'entrée (321) sur les au moins deux cartes de concentrateur (32) respectivement afin de former au moins deux liaisons de données d'entrée ; et
le module de traitement de sortie (313) est connecté aux ports de sortie (322) sur les au moins deux cartes de concentrateur (32) respectivement afin de former au moins deux liaisons de données de sortie.

7. Système de commutation pour améliorer une largeur de bande de commutation selon la revendication 2, dans lequel
le module de transmission est adapté pour distribuer les données à transmettre à d'autres liaisons de données connectées à une carte de concentrateur (32) sans défaillance et recevoir des données sur les autres liaisons de données connectées à la carte de concentrateur (32) sans défaillance quand une carte de concentrateur (32) connectée au module de transmission tombe en panne, de manière à mettre en oeuvre une convergence et un réassemblage des données.

8. Procédé de commutation pour améliorer une largeur de bande de commutation, comprenant :
la fourniture d'interconnexions entre des emplacements de cartes de concentrateur d'un fond de panier ;
l'insertion d'au moins deux cartes de concentrateur (32) dans les emplacements de cartes de concentrateur, et l'insertion de cartes nodales (31) dans les emplacements de cartes nodales du fond de panier, les emplacements de cartes de concentrateur étant adaptés en outre pour l'insertion des cartes nodales (31) ;
le démultiplexage, par une carte nodale (31), des données allant aux ports d'entrée (321) des aux moins deux cartes de concentrateur (32) de façon à expédier des données à chaque carte de concentrateur ; et
la commutation, par les au moins deux cartes de concentrateur (32), des données entrées depuis les ports d'entrée (321) vers des ports de sortie respectifs (322), et la production en sortie des données vers une autre carte nodale (31), de façon à mettre en oeuvre une commutation des données entre les cartes nodales en vue de leur commutation dans une pluralité de plans de commutation.

9. Procédé pour améliorer une largeur de bande de commutation selon la revendication 8, dans lequel,
la carte nodale (31) démultiplexe les données vers les ports d'entrée (321) des au moins deux cartes de concentrateur (32) de façon proportionnelle.

10. Procédé pour améliorer une largeur de bande de commutation selon la revendication 8 ou 9, dans lequel,
quand une carte de concentrateur (32) tombe en panne, la carte nodale (31) commute les données par le biais d'une carte de concentrateur (32) sans défaillance.

11. Procédé pour améliorer une largeur de bande de commutation selon la revendication 10, dans lequel, quand la carte de concentrateur (32) tombe en panne, d'autres cartes de concentrateur (32) sauf la carte de concentrateur défaillante (32) coopèrent les unes avec les autres pour mettre en oeuvre une fonction de commutation des données entre les cartes nodales (31).
